# EUROPEAN PATENT SPECIFICATION

(11) **EP 0 563 199 B1**
(45) Date of publication and mention of the grant of the patent: **20.09.1995**
(21) Application number: 92901864.6
(22) Date of filing: 18.12.1991
(51) Int. Cl.: B23D 45/16, B27B 9/00

(54) **HAND-HELD ELECTRICALLY OPERATED CIRCULAR SAW WITH A DETACHABLE AND ROTATABLE SAW UNIT**
ELEKTRISCHE HANDKREISSÄGE MIT ABNEHMBARER, DREHBARER SAGEEINHEIT
SCIE ELECTRIQUE CIRCULAIRE PORTATIVE, ET POURVUE D'UNE UNITE DE SCIAGE ROTATIVE ET AMOVIBLE

(30) Priority: 19.12.1990 SE 9004053
(43) Date of publication of application: 06.10.1993
(73) Proprietor: POWERTOOLS SWEDEN AKTIEBOLAG, S-745 25 Enköping (SE)
(72) Inventor: HOLMGREN, Bertil, S-230 40 Bara (SE); MUNTHER, Stig, S-199 42 Enköping (SE)
(74) Representative: Hammar, Ernst
(86) International application number: SE9100878
(87) International publication number: WO9211112

(56) References cited:
- SE-B- 360 815
- SE-B- 385 806
- SE-C- 139 395

## Description

The present invention relates to an electrically-operated circular handsaw comprising a motor housing with an electric motor, and a saw unit detachably connected to the motor housing according to the preamble of claim 1 as for example known from SE-C-139395.

Several different types of electrically-operated hand-saws are known to the art, including compass or keyhole saws and circular saws. Although the circular saws possess certain advantages with regard to sawing capacity and simplicity in construction, they cannot normally be manipulated with sufficient ease to enable workpieces to be sawn to high degrees of accuracy, for instance shape-sawing in conjunction with metal sheetwork. Compass saws, on the other hand, can be manipulated more easily, but have a relatively poor capacity. It is also known to provide saws with fittings which will enable them to be fitted to conventional electric drills, although hitherto tools of this nature have not functioned satisfactorily, due to instable connecting devices and to their excessively bulky and heavy construction when assembled, among other things.

It is therefore an object of the present invention to provide an electrically-operated circular handsaw whose capacity and maneuverability is superior to earlier known saws, particularly with respect to metal sheetwork. Another object is to enable such circular saws to be driven by means of electric drills which are intended to be handheld. Further objects of the invention and advantages afforded thereby are made evident in the following description. These objects are achieved with the circular saw defined in claim 1.

The present invention is based on the realization that circular saws which are intended for sawing sheet metal or the like in conjunction with installation work, car repairs and the like for instance, should have an elongated main configuration with the saw blade arranged perpendicularly to the longitudinal axis of the saw. In addition, the saw should be divided into a saw unit and a motor unit, so as to enable these units to be replaced individually and so as to enable standard drills to be used as a drive motor. According to the invention, a compact bevelled gear is provided for power transmission between the drive motor and the saw blade, and an ergonomically and functionally adapted guide sleeve is detachably mounted on the motor housing such as to support the saw head stably and to guide the bevelled gearing connection.

The invention will now be described in more detail with reference to the accompanying drawings, in which
- Figure 1: is a side view of one embodiment of an inventive circular saw;
- Figure 2: illustrates in larger scale the forward part of the saw illustrated in Figure 1; and
- Figure 3: is a cross-sectional view taken on the line A-A in Figure 2.

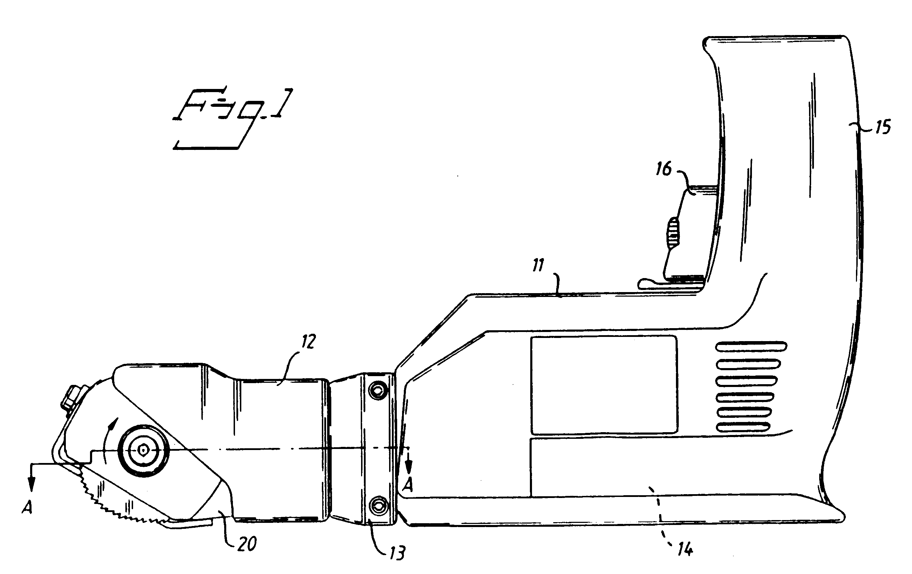

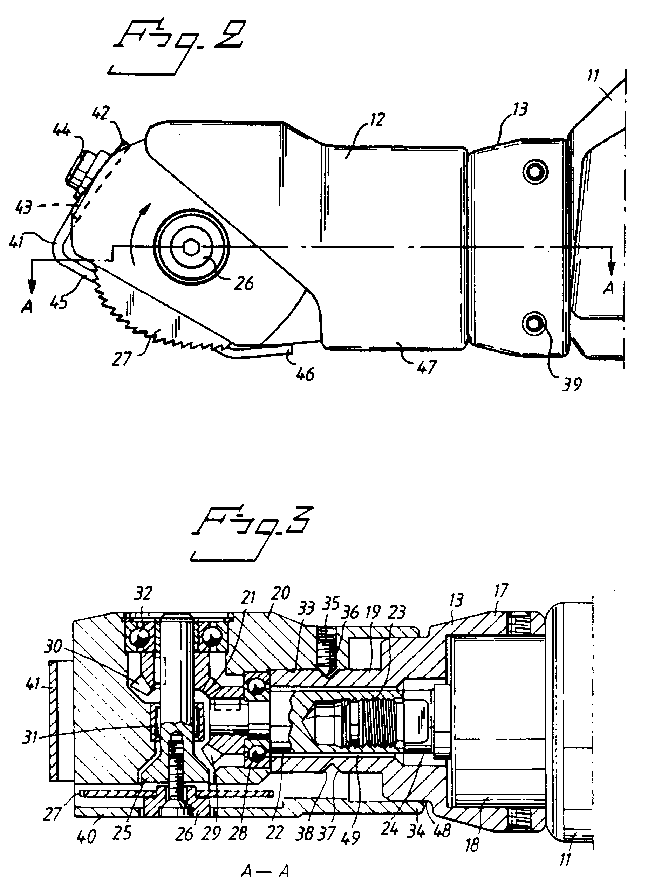

The illustrated circular saw comprises a motor housing 11 and a saw unit 12 which are mutually connected through the intermediary of a guide sleeve 13 on the saw unit. The motor housing is chosen from any appropriate standard electric drill which includes conventionally an electric motor 14, a handgrip 15 and an on/off trigger 16. The machine, however, has no drill chuck, but is instead connected directly to the saw unit 12. This connection includes the aforesaid guide sleeve 13, which has a wide collar part 17 which embraces the standard circular support neck 18 on the drill, and which has a narrower guide cylinder 19 which supports and guides a saw head 20. More specifically, the guide sleeve 13 comprises a cylindrical body which has three mutually different diameters which decrease stepwise from the collar part 17 to an intermediate, cylindrical shoulder 14, and to the guide cylinder 19. A central bore 49 extends through the whole of the guide sleeve. Mounted in the saw head 20 is a bevelled gearing 21 comprising an input drive shaft 22 which is provided with a screw thread connection 23 and which is connected to the output drive shaft 24 of the drill. This screw thread connection 23 and the drive shafts 22, 24 extend through the bore 49 and are therewith encircled by and also protected by the guide sleeve 13. Mounted on the output shaft 25 of the bevelled gearing is a carrier device 26 which is intended to carry a circular saw blade 27. The input shaft 22 is journalled in the saw head 20 by means of a ball-bearing 28 and is disposed fully in line with the output shaft 24 of the drill, through the intermediary of said ball-bearing and said thread connection 23. Mounted on the inner end of the shaft 22 is a conical gear wheel 29 which functions to transmit torque to a second conical gear wheel 30 firmly mounted in the output shaft 25. This gearing 25 is journalled in the saw head 20 with the aid of a needle bearing 31 and a rearward ball-bearing 32, such that the shafts 25 and 22 extend perpendicularly to one another. Thus, the output drive shaft 25, i.e. the saw-blade carrying shaft, is perpendicular to both the motor housing 11 and to the longitudinal axis of the saw unit 12.

For the purpose of connecting and guiding the saw head 20 in the guide sleeve 13, a cylindrical recess 33 is provided centrally in the saw head and adapted to the guide cylinder 19 on the guide sleeve 13. The saw head is also provided with a narrow cylindrical wall 34, which forms a junction between the saw head and the guide sleeve and which connects with the cylindrical shoulder 48 with a diameter corresponding to the diameter of the guide sleeve. The saw head 20 is assembled to the guide sleeve 13 with the aid of a screw device 35, consisting of one or more stop screws having conical tops and screwed through the wall of the saw head and into engagement with guide cylinder 19. The conical top 36 of respective stop screws is intended to engage in an annular groove 37 formed in the mantle surface of the guide cylinder. The groove has an angular cross-section with sloping abutment surfaces 38 intended for coaction with the conical tops 36 of respective locking screws 35. The guide sleeve 13 can be firmly mounted on the supporting neck 18 of the drill in some suitable, known manner, e.g. by means of locking screws 39 or by means of clamping devices which function to press the collar part 17 against the support neck. Loosening or removal of the locking screws will enable the guide sleeve 13, and therewith the whole of the saw unit 12, to be rotated around the support neck and locked in new, selected positions throughout one complete turn of the saw unit. If so desired, however, for instance for safety reasons, rotation of the saw unit can be restricted to ±90° in relation to the position shown in the drawings.

The saw head 20 is also provided with a fixed protective cover 40 which is intended to cover at least 60% of the circumference of the saw blade and to expose only one circular segment inclined to the longitudinal axis of the saw at the forward edge of the saw. The saw is thus intended to be held inclined slightly forwards in relation to its longitudinal axis, when sawing on a flat support surface. The saw depth can be adjusted to depths of up to 25 mm, with the aid of a support plate 41 in the form of an angled plate whose one leg 42 is provided with a slot 43 which accommodates a locking screw 44. The other leg 45 of the plate forms a flat saw support surface, while the outer free end 46 of said other leg is bent or angled upwards towards the saw head 20, so as to form a stable support. The leg 42 is bent around a circular line adapted to a corresponding rounding on the saw head 20, this rounding being adapted so that the support plate 41 can rotate around the free end 46 when adjusting the saw depth, without said end moving out of abutment with the saw head. The saw blade 27 preferably has a diameter of about 50 mm and the tool is particularly suited for sawing steel sheet having a thickness of up to 1 mm. The saw, however, is particularly suitable for sawing with the aid of saw blades of relatively small diameters, preferably between 40-60 mm and is, of course, not restricted to sawing steel sheet.

When fitting the saw unit to the motor housing, the guide sleeve 13 is first loosely attached to the support neck 18 of the drill. When the motor housing is comprised of a standard drill, as in the illustrated case, that is fitted with a drill chuck, the chuck is, of course, removed prior to fitting the guide sleeve. The saw head 20, together with a firmly mounted input shaft 22, is then screwed as a unit onto the shaft journal or drive shaft 24 of the drill. The guide sleeve and saw head are secured together to form a single unit, by tightening respective stop screws 35 so that the conical tops 36 of said screws enter the annular groove 37 and press the end of the guide sleeve against the ball-bearing 28, so as to fix the bearing in the correct position. The collar part 17 is then tightened firmly on the support neck, with the aid of the locking or tightening screws 39. The saw unit 12 is now firmly connected to the motor housing 11, but can be rotated around its own axis, as before mentioned, when the locking screws 39 are backed-off sufficient to enable the saw head to be rotated around the support neck 18 of the drill. The illustrated working state of the saw is normally the most appropriate, since the operator is able to grip the standard handgrip 15 on the motor housing with one hand and to grip the rearward part of the saw head and the collar 17 on the guide sleeve with the other hand. To this end, the collar part is preferably rounded and the saw head may be provided with an appropriate plastic covering 47 which bridges the join between the saw head and the guide sleeve.

## Claims

1. An electrically-operated circular handsaw comprising a motor housing (11) with an electric motor, and a saw unit (12) which is detachably connected to the motor housing, wherein the motor housing comprises a support neck (18) and an output drive shaft (24) for supporting and driving the saw unit (12); and wherein the saw unit includes a saw head (20), a bevelled gearing (21) incorporated in said saw head, input and output drive shafts (22, 25) connected to the bevelled gearing, and a circular saw-blade (27) supporting device (26) connected to the output shaft, **characterized** in that the saw unit includes a guide sleeve (13) which can be fitted detachably to the support neck (18) so as to support the saw head and to guide a connection (23) between the drive shaft (24) of the motor housing and the input drive shaft (22) connected to the bevelled gearing and that the guide sleeve (13) comprises a cylindrical body having a wide collar part (17) which encircles the support neck (18) of the motor housing, and a narrower guide cylinder (19) for rotatable engagement with a corresponding cylindrical recess (33) in the saw head (20), and a central through-passing bore (49) which surrounds and protects said connection (23) and said drive shafts (22, 24).

2. A circular saw according to Claim 1, **characterized** in that the output drive shaft (24) of the motor housing and the input shaft (22) of the bevelled gearing are in line with one another, whereas the output shaft (25) of said bevelled gearing extends perpendicular to the first-mentioned shafts.

3. A circular saw according to Claim 1 or 2, **characterized** in that the saw unit (12) can be rotated around the support neck (18) of the motor housing through an angle of at least 180°, and can be locked in selected positions with the aid of locking devices (39).

4. A circular saw according to any one of the preceding claims, **characterized** in that the saw head is guided and lockable in the guide cylinder (19) with the aid of an annular groove (37) provided therein and screw devices (35) in the saw head (20).

5. A circular saw according to Claim 4, **characterized** in that the screw device has a conical top (36); and in that the groove (37) in the guide cylinder has an abutment surface which is inclined correspondingly to the inclination of the conical top (36) and which coacts with said conical top in a manner to press the saw head (20) and the guide sleeve (13) together when locking the head to said sleeve.

6. A circular saw according to any one of the preceding claims, **characterized** in that the motor housing has the form of an electric handdrill with the drill chuck removed therefrom (24), and in that the connection between said output drive shaft and the drive shaft (22) of the bevelled gearing has the form of a screw connection (23) which conforms to the screw thread of the chuck.

7. A circular saw according to any one of the preceding claims, **characterized** in that the bevelled gearing (21) is a conical gearing which includes a first conical gear wheel (29) mounted on that end of the input shaft located in the gearing, and a second conical gear wheel (30) which is mounted on the output shaft (25) of said gearing.

8. A circular saw according to any one of the preceding claims, **characterized** in that the saw unit is intended for sawing with saw blades (27) of relatively small diameter, preferably diameters betwen 40-75 mm; and in that the saw head (20) includes a fixed protective cover (40) which is intended to cover protectively at least 60% of the periphery of said saw blade.

9. A circular saw according to any one of the preceding claims, **characterized** in that the saw head (20) has mounted thereon an adjustable support plate (41) for setting the saw depth; and in that the support plate (41) includes a first angled attachment leg (42) provided with a slot (43) which receives a locking screw (44), and a second leg (45) which is intended to abut supportingly the workpiece being sawn, the free end (46) of said supporting leg being bent upwards so as to abut the saw head (20).

## Patentansprüche

1. Elektrische Handkreissäge mit einem Motorgehäuse (11) mit einem Elektromotor und einer Sägeeinheit (12), die mit dem Motorgehäuse abnehmbar verbunden ist, wobei das Motorgehäuse einen Aufsteckhals (18) hat sowie eine Abtriebswelle (24) zum Tragen und Antreiben der Sägeeinheit 12 und wobei ferner die Sägeeinheit einen Sägekopf (20) aufweist, ein Kegelzahnradgetriebe (21), das in diesem Sägekopf eingebaut ist, Antriebs und Abtriebswellen (22) und (25), die mit dem Kegelradgetriebe verbunden sind sowie eine Befestigungsvorrichtung (26), die mit der Abtriebswelle verbunden ist und ein kreisrundes Sägeblatt (27) dreht, dadurch gekennzeichnet,
daß die Sägeeinheit eine Führungshülse (13) aufweist, die abnehmbar am Aufsteckhals (18) so angebracht werden kann, daß sie den Sägekopf trägt und eine Verbindung (23) zwischen der Abtriebswelle (24) des Motorgehäuses und der Antriebswelle (22) führt, die ihrerseits mit dem Kegelradgetriebe verbunden ist und
daß die Führungshülse (13) einen zylindrischen Körper aufweist, der einen breiten Kragenteil (17) hat, der den Aufsteckhals (18) des Motorgehäuses umgibt sowie einen schmaleren Führungszylinder (19) zur drehbaren Verbindung mit einer entsprechenden, zylindrischen Vertiefung (33) im Sägekopf (20) sowie eine mittige Durchlaßbohrung (49), die die Verbindung (23) und die Antriebswellen (22) und (24) umgibt und schützt.

2. Kreissäge nach Anspruch 1, dadurch gekennzeichnet, daß die Abtriebswelle (24) des Motorgehäuses und die Antriebswelle (22) des Kegelradgetriebes koaxial zueinander verlaufen, wohingegen die Abtriebswelle (25) des Kegelradgetriebes im rechten Winkel zu den erstgenannten Wellen verläuft.

3. Kreissage nach einem der Ansprüche 1 oder 2, dadurch gekennzeichnet, daß die Sägeeinheit (12) auf dem Aufsteckhals (18) des Motorgehäuses um einen Winkel von wenigstens 180° verdreht werden kann und daß sie in der ausgesuchten Stellung mit Hilfe von Feststellvorrichtungen (39) festgelegt werden kann.

4. Kreissäge nach einem der vorangegangenen Ansprüche, dadurch gekennzeichnet, daß der Sägekopf im Führungszylinder (19) mit Hilfe einer Ringnut (37) geführt und verriegelt werden kann, die in dem Führungszylinder vorgesehen ist sowie mit Schraubanordnungen (35) im Sägekopf (20).

5. Kreissäge nach Anspruch 4, dadurch gekennzeichnet, daß die Schraubanordnung eine konische Spitze (36) hat; und
daß die Nut (37) im Führungszylinder eine Anschlagfläche hat, die entsprechend der Neigung der konischen Spitze (36) geneigt ist und mit der konischen Spitze so zusammenarbeitet, daß der Sägekopf (20) und die Führungshülse (13) dann zusammengedrückt werden, wenn der Sägekopf an der Führungshülse festgelegt wird.

6. Kreissäge nach einem der vorangegangenen Ansprüche, dadurch gekennzeichnet, daß
das Motorgehäuse die Form einer elektrischen Handbohrmaschine hat, von der das Bohrfutter abgenommen worden ist und
daß die Verbindung zwischen der Abtriebswelle und der Antriebswelle (22) des Kegelradgetriebes die Form einer Schraubverbindung (23) hat, die dem Gewinde des Bohrfutters entspricht.

7. Kreissäge nach einem der vorangegeangenen Anspüche, dadurch gekennzeichnet, daß das Kegelradgetriebe (21) ein konisches Getriebe ist, daß ein erstes Kegelzahnrad (29) aufweist, das an denjenigem Ende der Antriebswelle angebracht ist, das im Getriebe liegt sowie ein zweites Kegelzahnrad (30), das auf der Abtriebswelle (25) des Getriebes befestigt ist.

8. Kreissäge nach einem der vorangegangenen Ansprüche, dadurch gekennzeichnet, daß
die Sägeeinheit dafür bestimmt ist, mit Sägeblättern (27) von relativ kleinem Durchmesser zu sägen, vorzugsweise mit Durchmessern zwischen 40 und 75 mm; und
daR der Sägekopf (20) eine feststehende Schutzabdeckung (40) aufweist, die dazu bestimmt ist, wenigstens 60% des Sägeblattumfanges schützend abzudecken.

9. Kreissäge nach einem der vorangegangenen Ansprüche, dadurch gekennzeichnet, daß am Sägekopf (20) ein einstellbares Stützblech (41) zum Einstellen der Sägetiefe befestigt ist; und
daR das Stützblech (41) eine ersten, abgebogenen Befestigungsschenkel (42) aufweist, der mit einem Schlitz (43) versehen ist, der seinerseits eine Befestigungsschraube (44) aufnimmt sowie mit einem zweiten Schenkel (45), der dazu bestimmt ist, abstützend auf dem gesägten Werkstück aufzuliegen, wobei das freie Ende (46) dieses abstützenden Schenkels so nach oben gebogen ist, daß es gegen den Sägekopf (20) anstößt.

## Revendications

1. Scie électrique circulaire portative comprenant un logement du moteur (11) équipé d'un moteur électrique, et d'une unité de sciage (12), qui est reliée de façon amovible au logement du moteur, dans laquelle le logement du moteur comprend un entourage de renfort (18) et un arbre de transmission de sortie (24) pour épauler et conduire l'unité de sciage (12); et dans laquelle l'unité de sciage comprend une tête de scie (20), un engrenage biseauté (21) incorporé à ladite tête de scie, des arbres de transmission d'entrée et de sortie (22, 25) connectés à l'engrenage biseauté, et un dispositif de renfort (26) de la lame de scie circulaire (27) connecté à l'arbre de sortie, caractérisée en ce que l'unité de sciage inclut un manchon d'assemblage de guidage (13) qui peut être attaché de façon amovible à l'entourage de renfort (18) de façon à soutenir la tête de scie et à guider une liaison (23) entre l'arbre de transmission (24) du logement du moteur et l'arbre de transmission de sortie (22) connecté à l'engrenage biseauté et que le manchon d'assemblage de guidage (13) comprend un corps cylindrique ayant une large partie en collet (17) qui entoure l'entourage de renfort (18) du logement du moteur, et un cylindre de guidage plus étroit (19) pour l'engagement en rotation avec un évidement cylindrique correspondant (33) dans la tête de scie (20), et un perçage central passant à travers (49) qui entoure et protège ladite liaison (23) et lesdits arbres de transmission (22, 24).

2. Une scie circulaire selon la revendication 1, caractérisée en ce que l'arbre de transmission de sortie (24) du logement du moteur et l'arbre d'entrée (22) de l'engrenage biseauté sont en ligne l'un par rapport à l'autre, tandis que l'arbre de sortie (25) dudit engrenage biseauté s'étend perpendiculairement aux arbres mentionnés en premier lieu.

3. Une scie circulaire selon la revendication 1 ou 2, caractérisée en ce que l'unité de sciage (12) peut être tournée autour du entourage de renfort (18) du logement du moteur d'un angle d'au moins 180°, et peut être bloquée dans des positions choisies à l'aide des dispositifs de blocage (39).

4. Une scie circulaire selon l'une quelconque des revendications précédentes, caractérisée en ce que la tête de scie est guidée et peut être bloquée dans le cylindre guide (19) à l'aide d'une rainure annulaire (37) disposée à l'intérieur et des dispositifs vissés (35) dans la tête de scie (20).

5. Une scie circulaire selon la revendication 4, caractérisée en ce que le dispositif à vis a une pointe conique (36); et en ce que la rainure dans le cylindre de guidage a une surface de contact qui est inclinée d'une manière correspondant à l'inclinaison de la pointe conique (36) et qui co-agit avec ladite pointe conique, de manière à presser la tête de scie (20) et le manchon d'assemblage de guidage (13) ensemble en bloquant l'extrémité dudit manchon.

6. Une scie circulaire selon l'une quelconque des revendications précédentes, caractérisée en ce que le logement du moteur a la forme d'une perceuse à main électrique avec le mandrin de la perceuse séparé de celle-ci (24), et en ce que la liaison entre ledit arbre de transmission de sortie et l'arbre de transmission (22) de l'engrenage biseauté a la forme d'une liaison par vis (23) qui s'adapte au pas de vis du mandrin.

7. Une scie circulaire selon l'une quelconque des revendications précédentes, caractérisée en ce que l'engrenage biseauté (21) est un engrenage conique qui inclut un premier engrenage conique (29) monté sur cette extrémité de l'arbre d'entrée, situé dans l'engrenage, et un second engrenage conique (30) qui est monté sur l'arbre de sortie (25) dudit engrenage.

8. Une scie circulaire selon l'une quelconque des revendications précédentes, caractérisée en ce que l'unité de sciage est destinée à scier avec des lames de scie (27) d'un diamètre relativement petit, de préférence des diamètres entre 40-75 mm; et en ce que la tête de scie (20) inclut un capot protecteur fixe (40) qui est destinée à couvrir en protégeant au moins 60% de la périphérie de ladite lame de scie.

9. Une scie circulaire selon l'une quelconque des revendications précédentes, caractérisée en ce qu'on a monté sur la tête de scie (20) un plateau de renfort ajustable (41) pour déterminer l'épaisseur de la scie; et en ce que le plateau de renfort (41) comprend une patte de fixation coudée (42) comportant une rainure (43) qui reçoit une vis de blocage (44), et une seconde patte (45) qui est destinée à épauler d'une manière qui soutient la pièce qui vient d'être sciée, l'extrémité libre (46) de ladite patte de renfort étant repliée vers le haut de façon à venir en contact avec la tête de scie (20).
